# EUROPÄISCHE PATENTSCHRIFT

(11) **EP 0 567 115 B1**
(45) Veröffentlichungstag und Bekanntmachung des Hinweises auf die Patenterteilung: **27.08.1997**
(21) Anmeldenummer: 93106544.5
(22) Anmeldetag: 22.04.1993
(51) Int. Cl.: F16L 11/127, F16L 11/14, F16L 11/08, B32B 1/08

(54) **Sicherheitsschlauch**
Security hose
Tuyau flexible de sécurité

(30) Priorität: 23.04.1992 DE 4213327
(43) Veröffentlichungstag der Anmeldung: 27.10.1993
(73) Patentinhaber: PHOENIX AKTIENGESELLSCHAFT, 21079 Hamburg (DE)
(72) Erfinder: Zerfowski, Peter, Dipl.-Ing., D-2104 Hamburg 92 (DE); Friederich, Hans-Werner, Dipl.-Ing., D-2090 Winsen (DE)

(56) Entgegenhaltungen:
- EP-A- 0 111 169
- EP-A- 0 418 772
- DE-A- 1 906 180
- GB-A- 2 165 331
- US-A- 3 905 398
- Encyclopedia of Polymer Science and Engineering, Vol. 14, pp. 362 - 367

## Beschreibung

Die Erfindung betrifft einen Sicherheitsschlauch aus elastomerem Werkstoff und/oder Kunststoff, bestehend aus einer Innenschicht, einem eingebetteten Festigkeitsträger mit zwei Festigskeitsträgerlagen, wobei sich zwischen den beiden Festigkeitsträgerlagen wenigstens eine trennende Zwischenschicht befindet, und eine Außenschicht, und wobei auf der der Innenschicht zugewandten Seite eine Festigkeitstägerlage mit geringer Dehnung sowie einem annähernd linearen hohen Modul und auf der der Außenschicht zugewandten Seite eine Festigkeitsträgerlage mit hoher Dehnung vorhanden ist.

Hinsichtlich Schläuchen mit einem gattungsgemäßen Aufbau gibt es einen umfangreichen Stand der Technik. Dabei kommen je nach Verwendungszweck im wesentlichen textile Festigkeitsträger (DE-A-23 55 285, DE-C-34 08 251), spiralförmige Festigkeitsträger (DE-A-31 25 499) oder auch Kombinationssysteme von derartigen Festigkeitsträgern (DE-A-19 06 180 DE-A-27 19 139, EP-B-0 356 911) zum Einsatz. Wenn nun der Festigkeitsträger zerstört ist, sei es durch chemischen Eingriff oder Beschädigung durch Verschleiß der Seele, platzt der Schlauch.

Es gibt jedoch Einsatzbereiche, wo der Schlauch nicht platzen darf, da ansonsten größere Schäden entstehen.

Aufgabe der Erfindung ist es daher, einen Sicherheitsschlauch bereitzustellen, der bei Zerstörung des Festigkeitsträgers nicht platzt und Notlaufeigenschaften hat. Gleichzeitig muß erkennbar sein, daß der Schlauch ausgetauscht werden muß.

Diese Aufgabe wird nun erfindungsgemäß dadurch gelöst, daß
- die der Innenschicht zugewandte Festigkeitsträgerlage eine Bruchdehnung < 10 % aufweist (Festigkeitsträgersystem I),
- während die der Außenschicht zugewandte Festigkeitsträgerlage eine Bruchdehnung > 10 % besitzt (Festigkeitsträgersystem II).

Wichtig ist, daß der Schlauch so konstruiert wird, daß er eine geringe Längendehnung (bei Spiralschläuchen) bzw. geringe Längendehnung und Umfangsdehnung (bei Schläuchen ohne Spirale) hat. Dies wird nun durch den Einsatz des Festigkeitsträgersystems I erreicht. Wird dieser Festigkeitsträger zerstört, übernimmt das Festigkeitsträgersystem II seine Funktion. Gleichzeitig wird der Schlauch sein Verhalten ändern. Denn, der Schlauch, der im unzerstörten Zustand ein geringes Dehnungsverhalten hatte, wird nach dem Ausfall des Festigkeitsträgersystems I ein hohes Dehnungsverhalten haben. Dieses Dehnungsverhalten kann durch geeignete Meßeinrichtungen mechanischer oder elektrischer Art sichtbar gemacht werden. Zweckmäßigerweise wird dabei in das Festigkeitsträgersystem I ein elektrischer Leiter eingebaut. In dem Augenblick, in dem dieser Festigkeitsträger zerstört wird, zeigt der elektrische Leiter durch eine Nichtleitfähigkeit eine Zerstörung des Festigkeitsträgersystems I an.

Beide Festigkeitsträgersysteme sind so ausgelegt, daß sie dem Betriebsdruck als Einzelbaustein standhalten. Hinsichtlich der Materialeigenschaften gelten folgende Parameter:

### Festigkeitsträgersystem I

- Werkstoffeigenschaft:: annähernd linear hoher Modul Bruchdehnung < 10 %
- Werkstoff:: Stahl, Aramid, acetalisierter Polyvinylalkohol (PVAA)

### Festigkeitsträgersystem II

- Werkstoffeigenschaft:: Bruchdehnung > 10 %
- Werkstoff:: Polyester, Polyamid

Besonders zweckmäßig ist es, wenn bei Spiralschläuchen das Festigkeitsträgersystem I einen Einlagenwinkel von < 54°44' und das Festigkeitsträgersystem II einen Einlagenwinkel von > 54°44' aufweist.

Die zusätzliche Schicht zwischen diesen beiden Festigkeitsträgersystemen, die eine übergreifende Zerstörung verhindern soll, besteht aus elastomerem Werkstoff (Mindeststärke: 0,5 mm) oder aus Kunststoff (Mindeststärke: 0,05 mm). Der Kunststoff besteht dabei zweckmäßigerweise aus Polyethylen, Polypropylen oder Polyamid. Auch kann ein fluorhaltiger Kunststoff eingesetzt werden.

Bei Spiralschläuchen wird in die Zwischenschicht die Spirale eingebaut.

Das erfindungsgemäße Aufbauprinzip wird nun anhand einer beispielhaften Ausführungsform unter Bezugnahme auf eine schematische Zeichnung dargestellt. Dabei weist die Wand des Sicherheitsschlauches folgenden Schichtenaufbau auf:
(1) Innenschicht (Seele);
(2) Festigkeitsträgersystem I ;
(3) Zwischenschicht;
(4) Festigkeitsträgersystem II ;
(5) Außenschicht (Decke).

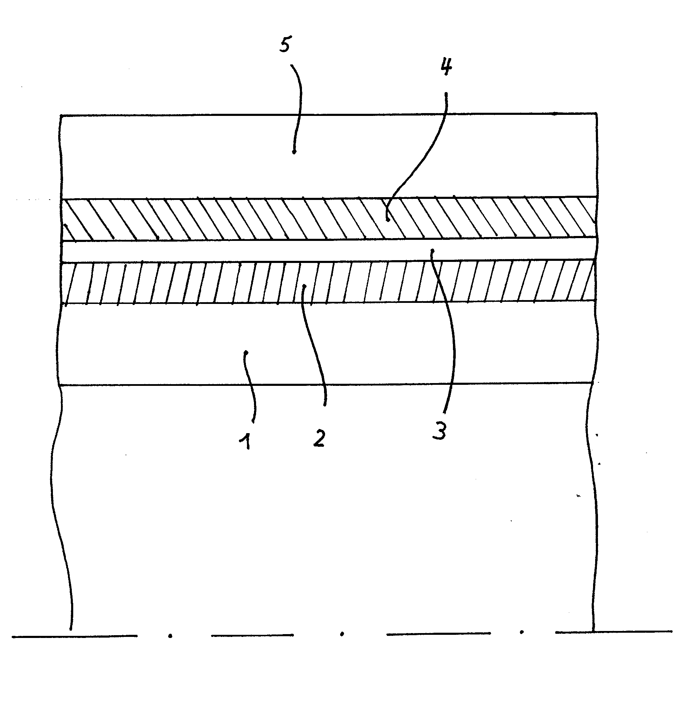

## Patentansprüche

1. Sicherheitsschlauch aus elastomerem Werkstoff und/oder Kunststoff, bestehend aus einer Innenschicht (1), einem eingebetteten Festigkeitsträger mit zwei Festigkeitsträgerlagen (2, 4), wobei sich zwischen den beiden Festigkeitsträgerlagen wenigstens eine trennende Zwischenschicht (3) befindet, und einer Außenschicht (5),und wobei auf der der Innenschicht (1) zugewandten Seite eine erste Festigkeitsträgerlage (2) mit geringer Dehnung sowie einem annähernd linearen hohen Modul und auf der der Außenschicht (5) zugewandten Seite eine zweite Festigkeitsträgerlage (4) mit hoher Dehnung vorhanden ist, dadurch gekennzeichnet, daß die erste Festigkeitsträgerlage (2) eine Bruchdehnung < 10% aufweist, während die zweite Festigkeitsträgerlage (4) eine Bruchdehnung > 10 % besitzt.

2. Sicherheitsschlauch nach Anspruch 1, dadurch gekennzeichnet, daß die zweite Festigkeitsträgerlage (4) aus Polyester oder Polyamid besteht.

3. Sicherheitsschlauch nach Anspruch 1 oder 2, dadurch gekennzeichnet, daß bei Spiralschläuchen die erste Festigkeitsträgerlage (2) einen Einlagenwinkel von < 54°44' und die zweite Festigkeitsträgerlage (4) einen Einlagenwinkel von > 54°44' aufweist.

4. Sicherheitsschlauch nach einem der Ansprüche 1 bis 3, dadurch gekennzeichnet, daß bei Einsatz von elastomerem Werkstoff die Gesamtstärke der Zwischenschicht wenigstens 0,5 mm beträgt.

5. Sicherheitsschlauch nach einem der Ansprüche 1 bis 3, dadurch gekennzeichnet, daß bei Einsatz von Kunststoff die Gesamtstärke der Zwischenschicht wenigstens 0,05 mm beträgt.

6. Sicherheitsschlauch nach einem der Ansprüche 1 bis 3 oder 5, dadurch gekennzeichnet, daß der Kunststoff aus Polyethylen, Polypropylen oder Polyamid besteht oder ein fluorhaltiger Kunststoff ist.

7. Sicherheitsschlauch nach einen der Ansprüche 1 bis 6, dadurch gekennzeichnet, daß in die erste Festigkeitsträgerlage (2) ein elektrischer Leiter eingebaut ist.

## Claims

1. A safety hose of elastomeric material and/or plastics, consisting of an inner layer (1), an embedded strength-carrier which comprises two strength-carrier layers (2, 4) with at least one interlayer (3) separating the pair of strength-carrier layers, and an outer layer (5), there being on the side next the inner layer (1) a first strength-carrier layer (2) having low elongation as well as an approximately linear high modulus, and on the side next the outer layer (5) a second strength-carrier layer (4) having high elongation, characterized in that the first strength-carrier layer (2) exhibits a breaking elongation < 10 %, whilst the second strength-carrier layer (4) has a breaking elongation > 10 %.

2. A safety hose as in Claim 1, characterized in that the second strength-carrier layer (4) consists of polyester or polyamide.

3. A safety hose as in Claim 1 or 2, characterized in that in the case of spiral hoses the first strength-carrier layer (2) exhibits an angle of inlay of < 54°44' and the second strength-carrier layer (4) an angle of inlay of > 54°44'.

4. A safety hose as in one of the Claims 1 to 3, characterized in that where elastomeric material is used the total thickness of the interlayer amounts to at least 0.5 mm.

5. A safety hose as in one of the Claims 1 to 3, characterized in that where plastics is used the total thickness of the interlayer amounts to at least 00.5 mm.

6. A safety hose as in one of the Claims 1 to 3 or 5, characterized in that the plastics consists of polyethylene, polypropylene or polyamide or is a plastics having a fluorine content.

7. A safety hose as in one of the Claims 1 to 6, characterized in that an electrical conductor is built into the first strength-carrier layer (2).

## Revendications

1. Tuyau flexible de sécurité en matériau élastomère et/ou en matière plastique, comprenant une couche interne (1), une armature noyée composée de deux couches d'armature (2,4), entre lesquelles se trouve au moins une couche intermédiaire de séparation (3), et une couche extérieure (5), et dans lequel se trouve, du côté tourné vers la couche intérieure (1), une première couche d'armature (2), ayant un faible allongement ainsi qu'un fort module quasi-linéaire, et, du côté tourné vers la couche extérieure (5), une deuxième couche d'armature (4), ayant un fort allongement, caractérisé en ce que la première couche d'armature (2) présente un allongement à la rupture < 10 % tandis que la deuxième couche d'armature (4) possède un allongement à la rupture > 10 %.

2. Tuyau flexible de sécurité selon la revendication 1, caractérisé en ce que la deuxième couche d'armature (4) est constituée de polyester ou de polyamide.

3. Tuyau flexible de sécurité selon la revendication 1 ou 2, caractérisé en ce que, pour des tuyaux spiralés, la première couche d'armature (2) présente un angle d'enroulement < 54° 44' et la deuxième couche d'armature (4), un angle d'enroulement > 54° 44'.

4. Tuyau flexible de sécurité selon l'une quelconque des revendications 1 à 3, caractérisé en ce que l'épaisseur totale de la couche intermédiaire s'élève à au moins 0,5 mm lorsqu'on utilise un matériau élastomère.

5. Tuyau flexible de sécurité selon l'une quelconque des revendications 1 à 3, caractérisé en ce que l'épaisseur totale de la couche intermédiaire s'élève à au moins 0,05 mm lorsqu'on utilise une matière plastique.

6. Tuyau flexible de sécurité selon l'une quelconque des revendications 1, 2, 3 et 5, caractérisé en ce que la matière plastique est un polyéthylène, polypropylène ou polyamide, ou est une matière plastique contenant du fluor.

7. Tuyau flexible de sécurité selon l'une quelconque des revendications 1 à 6, caractérisé en ce qu'un conducteur électrique est incorporé dans la première couche d'armature (2).
